# FASCICULE DE BREVET EUROPEEN

(11) **EP 3 945 467 B1**
(45) Date de publication et mention de la délivrance du brevet: **31.05.2023**
(21) Numéro de dépôt: 21185199.3
(22) Date de dépôt: 13.07.2021
(51) Int. Cl.: G06K 19/073, G06K 19/07, G06F 9/50, G06F 16/176

(54) **TRANSPONDEUR SANS CONTACT**
KONTAKTLOSER TRANSPONDER
CONTACTLESS TRANPONDER

(30) Priorité: 27.07.2020 FR 2007916
(43) Date de publication de la demande: 02.02.2022
(73) Titulaire: STMICROELECTRONICS (GRENOBLE 2) SAS, 38000 Grenoble (FR)
(72) Inventeur: LABYRE, Jean-Louis, 38360 SASSENAGE (FR)
(74) Mandataire: Casalonga

(56) Documents cités:
- EP-A2- 0 733 992
- EP-B2- 0 733 992
- FR-A1- 3 078 451
- US-A1- 2008 303 631
- US-A1- 2017 091 123

## Description

Des modes de mise en oeuvre et de réalisation de l'invention concernent les transpondeurs sans contact, notamment des transpondeurs NFC ou des transpondeur RFID.

Dans le domaine des technologies de communication sans fil (sans contact), on connaît la radio-identification, plus connue sous la dénomination RFID (acronyme de l'anglais « Radio Frequency Identification). La radio-identification permet de détecter et d'identifier automatiquement des transpondeurs attachés à des objets en utilisant des ondes radiofréquences.

Dans le domaine des technologies de communication sans fil, on connaît également la communication champ proche, plus connue sous la dénomination NFC (acronyme de l'anglais « Near Field Communication »), qui est une extension de la radio-identification.

La communication champ proche permet une communication par ondes radiofréquences sur une courte distance entre un lecteur sans contact et un transpondeur.

Un transpondeur sans contact est un dispositif électronique capable d'échanger des informations via une antenne avec un lecteur sans contact, selon un protocole de communication sans contact, par exemple un protocole compatible avec la technologie NFC ou RFID.

Un transpondeur sans contact peut être une étiquette (en anglais « tags ») ou une carte.

Un tel transpondeur sans contact peut être incorporé dans un objet connecté comprenant également un microcontrôleur. Le transpondeur sans contact sert alors de passerelle entre un lecteur sans contact et le microcontrôleur de l'objet connecté.

L'objet connecté peut être une montre connectée, ou bien un équipement connecté de domotique, ou encore un équipement public connecté, tel qu'un lampadaire connecté, sans que ces exemples ne soient limitatifs.

Le lecteur sans contact est un appareil externe de communication qui peut être un téléphone mobile cellulaire (connu également sous la dénomination anglo-saxonne « smartphone ») par exemple.

Les demandes de brevet publiées sous les numéros US 2017/091123 A1, FR 3 078 451 A1, EP 0 733 992 A2 et US 2008/303631 A1 illustrent l'état de la technique antérieure.

En particulier, le transpondeur sans contact peut comprendre une interface filaire permettant de communiquer avec le microcontrôleur, et une interface sans contact couplée à une antenne de l'objet connecté permettant de communiquer avec le lecteur sans contact.

Le transpondeur sans contact peut également comprendre une mémoire pouvant être accédée par l'interface filaire et par l'interface sans contact.

Un tel transpondeur sans contact servant de passerelle peut également être appelé « transpondeur dynamique » puisque les données stockées temporairement dans sa mémoire peuvent varier au cours du temps, soit du fait du lecteur sans contact, soit du fait du microcontrôleur.

Pour un tel transpondeur, un accès simultané à la mémoire par l'interface filaire et par l'interface sans contact est impossible. Il est donc généralement prévu une solution d'arbitrage permettant de gérer les accès à la mémoire. En particulier, une solution d'arbitrage utilisée consiste à donner l'accès à la mémoire à l'interface, parmi l'interface filaire et l'interface sans contact, ayant émis en premier une requête d'accès. Les requêtes d'accès à la mémoire de l'autre interface sont alors ignorées tant que la mémoire est accédée par l'interface ayant gagné l'accès à la mémoire.

L'interface en attente d'un accès à la mémoire n'a pas d'informations quant à l'état d'accès à la mémoire. Cette interface émet donc régulièrement de nouvelles requêtes d'accès jusqu'à ce qu'un accès à la mémoire lui soit accordé.

Or, il est possible que les requêtes d'accès par l'interface sans contact soient fréquentes, notamment lorsque le transpondeur subit une attaque par requêtes d'accès répétées émises par un lecteur sans contact. Dans ce cas, les requêtes d'accès émises par le microcontrôleur peuvent être ignorées tant que l'accès à la mémoire est attribué à l'interface sans contact. Les requêtes d'accès provenant de l'interface sans contact rendent donc difficile, voire empêchent, l'accès à la mémoire par le microcontrôleur. Une attribution de l'accès à la mémoire à l'interface filaire peut donc prendre du temps et est consommatrice d'énergie du fait que le microcontrôleur doit émettre régulièrement des requêtes d'accès.

Il existe donc un besoin de proposer une solution permettant à un transpondeur d'autoriser un accès à la mémoire au microcontrôleur en tout temps, notamment même lorsque des requêtes d'accès répétées sont émises par l'interface sans contact.

Selon un aspect, il est proposé un transpondeur sans contact comprenant :
- une mémoire,
- une antenne configurée pour recevoir des signaux, notamment des signaux radiofréquence,
- une interface sans contact couplée à l'antenne et configurée pour émettre des requêtes d'accès à la mémoire selon les signaux reçus,
- une interface filaire configurée pour recevoir des requêtes d'accès à la mémoire,
- un module d'arbitrage configuré pour autoriser un accès à la mémoire soit pour les requêtes d'accès émises par l'interface sans contact soit pour les requêtes d'accès reçues par l'interface filaire,
et dans lequel l'interface filaire est également configurée pour recevoir des commandes d'arrêt et transmettre ces commandes d'arrêt au module d'arbitrage, le module d'arbitrage étant configuré pour pouvoir arrêter l'interface sans contact lorsqu'il reçoit une commande d'arrêt, de façon à autoriser un accès exclusif à la mémoire pour les requêtes d'accès reçues par l'interface filaire.

En particulier, l'interface filaire peut être configurée pour recevoir des requêtes d'accès à la mémoire issues d'un module maître extérieur au transpondeur, notamment par l'intermédiaire d'un bus. Le module maître est une unité de traitement, par exemple un microcontrôleur. Le module maître peut être configuré pour émettre les commandes d'arrêt et les requêtes d'accès à la mémoire du transpondeur.

Le transpondeur peut donc servir de passerelle entre ce module maître et un lecteur sans contact.

Le transpondeur proposé est configuré pour arrêter l'interface sans contact dès que le module maître indique qu'il souhaite accéder à la mémoire en transmettant ladite commande d'arrêt à l'interface filaire du transpondeur. En arrêtant l'interface sans contact, cette dernière ne peut plus accéder à la mémoire.

L'interface sans contact ne peut donc plus bloquer l'accès à la mémoire au module maître.

De la sorte, le module maître obtient un accès exclusif à la mémoire.

Un tel transpondeur est donc robuste contre les attaques par requêtes d'accès répétées émises par un lecteur sans contact.

Dans un mode de réalisation avantageux, le module d'arbitrage est configuré pour générer un signal d'interruption et pour transmettre ce signal d'interruption à une sortie du transpondeur après avoir arrêté l'interface sans contact.

Cette sortie du transpondeur est ainsi configurée pour transmettre le signal d'interruption au module maître. En particulier, le module maître peut alors comprendre une entrée connectée électriquement à cette sortie du transpondeur par une connexion filaire pour recevoir le signal d'interruption00. Le signal d'interruption permet alors d'informer le module maître que l'interface sans contact est arrêtée. Le signal d'interruption permet donc d'indiquer au module maître que ses requêtes d'accès à la mémoire pourront être traitées.

Le module maître n'a donc pas à envoyer régulièrement des requêtes d'accès à la mémoire jusqu'à ce qu'un accès à la mémoire lui soit accordé. Le module maître attend simplement de recevoir le signal d'interruption. La réception du signal d'interruption lui indique que ses requêtes d'accès à la mémoire seront accordées.

Du fait que le module maître a simplement à attendre de recevoir le signal d'interruption, la consommation en énergie du module maître est réduite. En outre, du temps peut être sauvé du fait que le signal d'interruption indique le moment à partir duquel une requête d'accès peut être émise et accordée.

De plus, le trafic sur le bus est réduit.

Dans un mode de réalisation avantageux, l'interface filaire est également configurée pour recevoir des commandes de réactivation et transmettre ces commandes de réactivation au module d'arbitrage, le module d'arbitrage étant configuré pour réactiver l'interface sans contact lorsqu'il reçoit une commande de réactivation.

En particulier, le module maître peut être configuré pour émettre les commandes de réactivation qu'il transmet à l'interface filaire.

L'interface filaire peut donc être configurée pour recevoir des commandes de réactivation provenant du module maître.

De la sorte, le module maître est configuré pour réactiver l'interface sans contact lorsqu'il n'a plus besoin d'accéder à la mémoire.

En particulier, le module maître peut être configuré pour pouvoir réactiver l'interface sans contact à la fin d'un accès mémoire de ce module maître.

En variante ou en combinaison, il est également possible de réactiver l'interface sans contact lorsque l'interface filaire est désactivée (notamment lorsqu'une alimentation filaire est coupée).

Dans un mode de réalisation avantageux, le module d'arbitrage est configuré pour recevoir une information sur un état d'un accès en écriture à la mémoire par l'interface sans contact, et pour, lorsqu'une commande d'arrêt est reçue alors qu'un accès en écriture à la mémoire par l'interface sans contact est en cours, attendre que cet accès en écriture soit terminé pour arrêter l'interface sans contact.

Ainsi, le transpondeur est configuré pour permettre à l'interface sans contact de terminer une écriture dans la mémoire après avoir reçu une commande d'arrêt.

Le transpondeur permet alors d'empêcher une corruption de la mémoire pouvant survenir lorsque l'interface sans contact est arrêtée avant la fin de l'écriture.

Avantageusement, l'interface filaire est adaptée pour être couplée à un bus I²C (acronyme de l'anglais « Inter Integrated Circuit »). En variante, le bus peut être de type SPI (acronyme de l'anglais « Serial Peripheral Interface »).

De préférence, l'interface filaire est configurée pour recevoir des commandes comportant une adresse et des données utiles.

Ainsi, l'interface filaire est adaptée pour communiquer avec un bus de type I²C.

Dans un mode de réalisation avantageux, la commande d'arrêt est une commande comportant une adresse dédiée à cette commande d'arrêt et un bit de lecture/écriture. De préférence, l'adresse est représentée sur 7 bits.

La commande d'arrêt présente alors une structure simple. Cette structure est adaptée pour être transmise par un bus de type I²C.

Du fait qu'une adresse dédiée soit choisie pour cette commande d'arrêt, la commande d'arrêt n'est pas vue comme une requête d'accès mémoire par le transpondeur. Ainsi, la commande d'arrêt n'a aucun effet sur le traitement des requêtes d'accès mémoire transitant par le bus.

Avantageusement, la commande d'arrêt est représentée par un seul octet. La commande d'arrêt est alors rapide à transmettre.

Toutefois, en variante, il est également possible de prévoir une commande d'arrêt pouvant être représentée sur plus d'un octet.

De même, dans un mode de réalisation avantageux, la commande de réactivation est une commande comportant uniquement une adresse dédiée à cette commande de réactivation et un bit de lecture/écriture.

La commande de réactivation présente alors une structure simple. Cette structure est adaptée pour être transmise par un bus de type I²C.

En particulier, l'adresse utilisée pour la commande de réactivation est différente de celle utilisée pour la commande d'arrêt.

Du fait qu'une adresse dédiée soit choisie pour cette commande de réactivation, la commande de réactivation n'est pas vue comme une requête d'accès mémoire par le transpondeur. Ainsi, la commande de réactivation n'a aucun effet sur le traitement des requêtes d'accès mémoire transitant par le bus.

Dans un mode de réalisation avantageux, la commande de réactivation est représentée par un seul octet. La commande de réactivation est alors rapide à transmettre.

Toutefois, en variante, il est également possible de prévoir une commande de réactivation pouvant être représentée sur plus d'un octet.

De préférence, le transpondeur est capable d'échanger des informations via l'antenne avec un lecteur sans contact externe, selon un protocole de communication sans contact compatible avec la technologie NFC ou RFID.

Selon un autre aspect, il est proposé un système comprenant :
- un transpondeur tel que décrit précédemment, et
- un module maître couplé à l'interface filaire du transpondeur, le module maître étant configuré pour émettre des commandes d'arrêt à destination du transpondeur puis pour envoyer des requêtes d'accès mémoire après un arrêt de l'interface sans contact effectué par le module d'arbitrage du transpondeur suite à la réception par l'interface filaire d'une commande d'arrêt.

Dans un mode de réalisation avantageux, le module maître est un microcontrôleur.

Selon un autre aspect, il est proposé un objet connecté comprenant un système tel que décrit précédemment.

Selon un autre aspect, il est proposé un procédé de gestion des accès à une mémoire d'un transpondeur tel que décrit précédemment, comprenant :
- une réception par l'interface filaire d'une commande d'arrêt, puis
- une transmission de la commande d'arrêt au module d'arbitrage, puis
- un arrêt de l'interface sans contact par le module d'arbitrage, de façon à autoriser un accès exclusif à la mémoire pour des requêtes d'accès reçues par l'interface filaire.

Dans un mode de mise en oeuvre avantageux, le procédé comprend, suite à l'arrêt de l'interface sans contact par le module d'arbitrage, une génération d'un signal d'interruption par le module d'arbitrage, puis une transmission de ce signal d'interruption à une sortie du transpondeur.

Dans un mode de mise en oeuvre avantageux, lorsqu'une commande d'arrêt est reçue alors qu'un accès en écriture à la mémoire par l'interface sans contact est en cours, l'arrêt de l'interface sans contact est réalisé après que cet accès en écriture soit terminé.

Dans un mode de mise en oeuvre avantageux, le procédé comprend, suite à l'arrêt de l'interface sans contact :
- une réception d'une commande de réactivation par l'interface filaire, puis
- une transmission de cette commande de réactivation au module d'arbitrage, puis
- une réactivation de l'interface sans contact par le module d'arbitrage.

D'autres avantages et caractéristiques de l'invention apparaîtront à l'examen de la description détaillée de modes de mise en oeuvre et de réalisation, nullement limitatifs, et des dessins annexés sur lesquels :
[Fig 1]
[Fig 2]
[Fig 3]
[Fig 4]
[Fig 5]
[Fig 6]
[Fig 7]

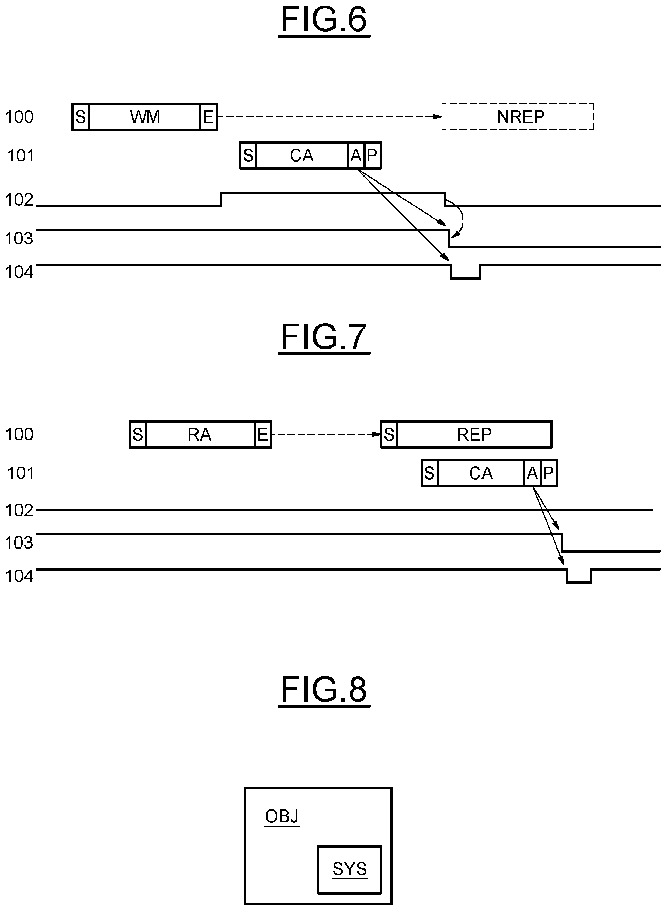

[Fig 8] illustrent schématiquement des modes de réalisation et de mise en oeuvre de l'invention.

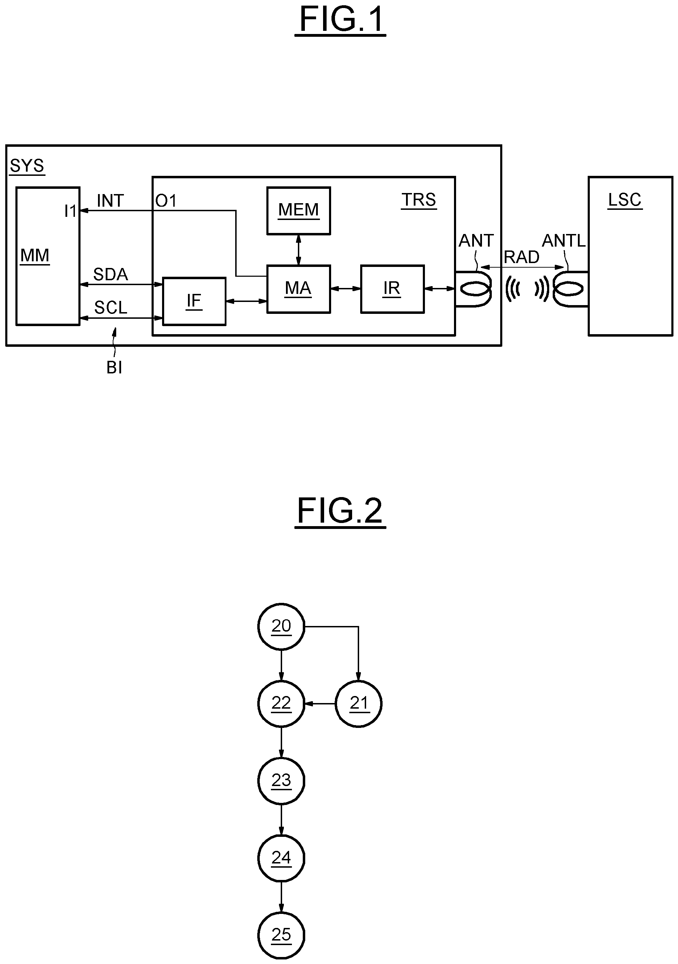

La figure 1 illustre schématiquement un système SYS selon un mode de réalisation de l'invention. Le système SYS est configuré pour communiquer avec un lecteur sans contact LSC.

Le lecteur sans contact LSC peut par exemple être un appareil externe de communication sans contact, par exemple un téléphone mobile multifonction, plus connu sous l'anglicisme « smartphone ».

Le lecteur sans contact LSC comprend une antenne ANTL.

Le système SYS comprend un transpondeur sans contact TRS et un module maître MM.

Le module maître MM est une unité de traitement, par exemple un microcontrôleur.

Le transpondeur TRS peut être une étiquette (« tag ») ou une carte.

Le transpondeur TRS sert de passerelle entre le module maître MM et le lecteur sans contact LSC.

Le transpondeur TRS comprend une antenne ANT configurée pour recevoir des signaux radiofréquence RAD émis par le lecteur sans contact LSC.

En particulier, le transpondeur TRS est capable d'échanger des informations via l'antenne ANT avec un lecteur sans contact LSC, selon un protocole de communication sans contact, par exemple compatible avec la technologie NFC ou RFID.

La technologie NFC est une plate-forme technologique ouverte normalisée dans la norme ISO/IEC 18092 et ISO/IEC 21481 et incorpore de nombreuses normes déjà existantes comme par exemple ISO 14443 ou ISO 15693 utilisées au niveau des protocoles de communication.

Lors d'une transmission d'information entre le lecteur LSC et le transpondeur TRS, le lecteur LSC génère un champ magnétique par l'intermédiaire de son antenne ANTL qui est typiquement une onde porteuse sinusoïdale à 13,56MHz. Les informations sont communiquées par une modulation d'amplitude de ladite porteuse.

Le transpondeur TRS comprend une interface sans contact IR couplée à l'antenne ANT.

L'interface sans contact IR comporte notamment des moyens de démodulation (non représentés) adaptés pour démoduler les signaux radiofréquence reçus afin d'obtenir les données transmises depuis le lecteur LSC.

Le transpondeur TRS comprend en outre une interface filaire IF couplée au module maître MM par l'intermédiaire d'un bus BI. De préférence, le bus BI est un bus I²C. En variante, le bus BI peut être de type SPI (acronyme de l'anglais « Serial Peripheral Interface ») par exemple.

En particulier, le bus BI comporte deux lignes bidirectionnelles. Une première ligne SDA est configurée pour transmettre des données. La deuxième ligne SCL est une ligne d'horloge de synchronisation.

Le transpondeur sans contact TRS comprend également une mémoire MEM, notamment une mémoire non volatile. La mémoire MEM peut par exemple être une mémoire EEPROM.

Le lecteur sans contact LSC est configuré pour émettre des requêtes d'accès à la mémoire MEM du transpondeur TRS. Ces requêtes d'accès sont transmises au transpondeur TRS par l'intermédiaire de signaux radiofréquence RAD pouvant être reçus par l'antenne ANT du transpondeur TRS.

L'interface sans contact IR est configurée pour recevoir des requêtes d'accès à la mémoire MEM traduits des signaux radiofréquence reçus par l'antenne ANT et provenant du lecteur sans contact LSC.

L'interface sans contact peut être dans un état activé ou arrêté. L'état de l'interface sans contact est mémorisé dans un registre.

Le module maître MM est également configuré pour émettre des requêtes d'accès à la mémoire MEM du transpondeur LSC et les transmettre à l'interface filaire IF par l'intermédiaire du bus BI.

L'interface filaire IF est donc configurée pour recevoir les requêtes d'accès à la mémoire MEM émises par le module maître MM.

Néanmoins, la mémoire MEM ne peut être accédée simultanément par les requêtes d'accès reçus par l'interface filaire IF et par les requêtes d'accès reçus par l'interface sans contact IR.

Le transpondeur TRS comprend alors un module d'arbitrage MA permettant de gérer les accès à la mémoire MEM.

Le module d'arbitrage MA peut être un circuit logique.

Le module d'arbitrage MA est couplé à l'interface filaire IF, à l'interface sans contact IR et à la mémoire MEM. Le module d'arbitrage MA peut ainsi recevoir les requêtes d'accès provenant de l'interface filaire IF et de l'interface sans contact IR puis les transmettre à la mémoire MEM.

Par ailleurs, le module maître MM est également configuré pour émettre des commandes d'arrêt et les transmettre à l'interface filaire IF par l'intermédiaire du bus BI.

L'interface filaire IF est configurée pour recevoir les commandes d'arrêt et pour les transmettre au module d'arbitrage MA.

Le module d'arbitrage MA est configuré pour recevoir les commandes d'arrêt provenant de l'interface filaire IF et pour arrêter l'interface sans contact IR après avoir reçu une telle commande d'arrêt.

L'arrêt de l'interface sans contact IR permet d'empêcher au lecteur sans contact LSC d'accéder à la mémoire MEM du transpondeur TRS. Les requêtes d'accès émises par le lecteur sans contact LSC sont alors ignorées.

Le module maître a alors un accès exclusif à la mémoire.

En particulier, le transpondeur TRS est configuré pour arrêter l'interface sans contact IR dès que le module maître MM indique qu'il souhaite accéder à la mémoire MEM en transmettant ladite commande d'arrêt à l'interface filaire IF du transpondeur TRS. En arrêtant l'interface sans contact IR, cette dernière ne peut plus accéder à la mémoire MEM.

De la sorte, le module maître MM obtient un accès exclusif à la mémoire MEM.

L'interface sans contact IR ne peut donc plus bloquer l'accès à la mémoire MEM au module maître MM.

Un tel transpondeur TRS est donc robuste contre des attaques par requêtes d'accès répétées émises par un lecteur sans contact LSC.

Plus particulièrement, le module d'arbitrage MM est configuré pour, lorsqu'il reçoit une commande d'arrêt alors qu'un accès en écriture par l'interface sans contact IR à la mémoire MEM est en cours, attendre la fin de cet accès en écriture pour arrêter l'interface sans contact IR.

Le module d'arbitrage MA est donc configuré pour empêcher une corruption de la mémoire MEM pouvant survenir lorsque l'interface sans contact IR est arrêtée avant la fin de l'écriture.

De préférence, la commande d'arrêt est une commande comportant uniquement une adresse dédiée à cette commande d'arrêt et un bit de lecture/écriture.

La commande d'arrêt présente alors une structure simple. Cette structure est adaptée pour être transmise par un bus BI de type I²C.

Du fait qu'une adresse dédiée soit choisie pour cette commande d'arrêt, la commande d'arrêt n'est pas vue comme une requête d'accès mémoire par le transpondeur TRS. Ainsi, la commande d'arrêt n'a aucun effet sur le traitement des requêtes d'accès mémoire transitant par le bus BI.

Avantageusement, la commande d'arrêt est représentée par un seul octet, l'adresse dédiée à la commande d'arrêt étant représentée sur 7 bits.

La commande d'arrêt est alors rapide à transmettre.

Par ailleurs, le module d'arbitrage MA est configuré pour générer un signal d'interruption INT et pour transmettre ce signal d'interruption à une sortie O1 du transpondeur TRS après avoir arrêté l'interface sans contact IR suite à la réception d'une commande d'arrêt.

La sortie O1 est alors configurée pour transmettre le signal d'interruption INT à une entrée I1 du module maître MM par l'intermédiaire d'une connexion filaire entre la sortie O1 et l'entrée I1.

Le signal d'interruption INT permet d'informer le module maître MM que l'interface sans contact IR est arrêtée. Le signal d'interruption INT permet donc d'indiquer au module maître MM que ses requêtes d'accès à la mémoire MEM pourront être traitées.

Le module maître MM n'a donc pas à envoyer régulièrement des requêtes d'accès à la mémoire MEM jusqu'à ce qu'une requête d'accès à la mémoire MEM soit accordée. Le module maître MM attend simplement de recevoir le signal d'interruption INT pour savoir qu'il peut émettre des requêtes d'accès à la mémoire MEM après avoir émis la commande d'arrêt.

Du fait que le module maître MM a simplement à attendre de recevoir le signal d'interruption INT, la consommation en énergie du module maître MM est réduite. En outre, du temps peut être sauvé du fait que le signal d'interruption INT indique le moment à partir duquel une requête d'accès peut être émise et accordée.

De plus, le trafic sur le bus BI est réduit.

Par ailleurs, le module maître MM est également configuré pour émettre des commandes de réactivation et les transmettre à l'interface filaire IF par l'intermédiaire du bus BI.

Le module d'arbitrage est configuré pour recevoir les commandes de réactivation provenant de l'interface filaire IF et pour réactiver l'interface sans contact IR après avoir reçu une telle commande de réactivation.

La réactivation de l'interface sans contact IR permet au lecteur sans contact LSC d'accéder de nouveau à la mémoire MEM du transpondeur TRS. Les requêtes d'accès de l'interface sans contact IR ne sont donc plus ignorées.

De préférence, la commande de réactivation est une commande comportant uniquement une adresse dédiée à cette commande de réactivation et un bit de lecture/écriture.

La commande de réactivation présente alors une structure simple. Cette structure est adaptée pour être transmise par un bus BI de type I²C.

En particulier, l'adresse utilisée pour la commande de réactivation est différente de celle utilisée pour la commande d'arrêt.

Du fait qu'une adresse dédiée soit choisie pour cette commande de réactivation, la commande de réactivation n'est pas vue comme une requête d'accès mémoire par le transpondeur TRS. Ainsi, la commande de réactivation n'a aucun effet sur le traitement des requêtes d'accès mémoire transitant par le bus BI.

De préférence, la commande de réactivation est représentée par un seul octet, l'adresse dédiée à la commande de réactivation étant représentée sur 7 bits.

La commande de réactivation est alors rapide à transmettre.

En variante ou en combinaison, En variante, le module d'arbitrage peut être configuré pour pouvoir réactiver l'interface sans contact lorsque l'interface filaire est désactivée (notamment lorsqu'une alimentation filaire est coupée).

La figure 2 illustre un procédé de gestion des accès mémoire pouvant être mis en oeuvre par le transpondeur TRS décrit précédemment.

À l'étape 20, le module d'arbitrage MA reçoit une commande d'arrêt reçue par l'interface filaire IF et provenant du module maître MM.

Si l'interface sans contact IR est en train d'effectuer un accès en écriture à la mémoire MEM lorsque le module d'arbitrage MA reçoit la commande d'arrêt, alors le module d'arbitrage MA attend à l'étape 21 que cet accès en écriture soit terminé puis arrête l'interface sans contact IR à l'étape 22.

Sinon, le module d'arbitrage MA arrête l'interface sans contact IR en passant directement à l'étape 22 dès réception de la commande d'arrêt si l'interface sans contact IR n'est pas en train d'effectuer un accès en écriture à la mémoire MEM.

Après avoir arrêté l'interface sans contact IR à l'étape 22, le module d'arbitrage MA génère le signal d'interruption INT à l'étape 23 et la transmet à l'interface filaire IF. Ce signal d'interruption est transmis à la sortie O1 du transpondeur TRS. Ce signal d'interruption est ensuite envoyé à l'entrée I1 du module maître MM par l'intermédiaire de la connexion filaire entre l'entrée I1 du module maître et la sortie O1 du transpondeur TRS. Le signal d'interruption permet d'indiquer au module maître MM qu'il a un accès exclusif à la mémoire MEM.

L'interface sans contact IR reste arrêtée à l'étape 24 jusqu'à ce que le module d'arbitrage MA reçoive une commande de réactivation reçue par l'interface filaire IF et provenant du module maître MM.

Une fois la commande de réactivation reçue, le module d'arbitrage réactive l'interface sans contact à l'étape 25.

En variante, le module d'arbitrage peut réactiver l'interface sans contact lorsque l'interface filaire est désactivée (notamment lorsqu'une alimentation filaire est coupée).

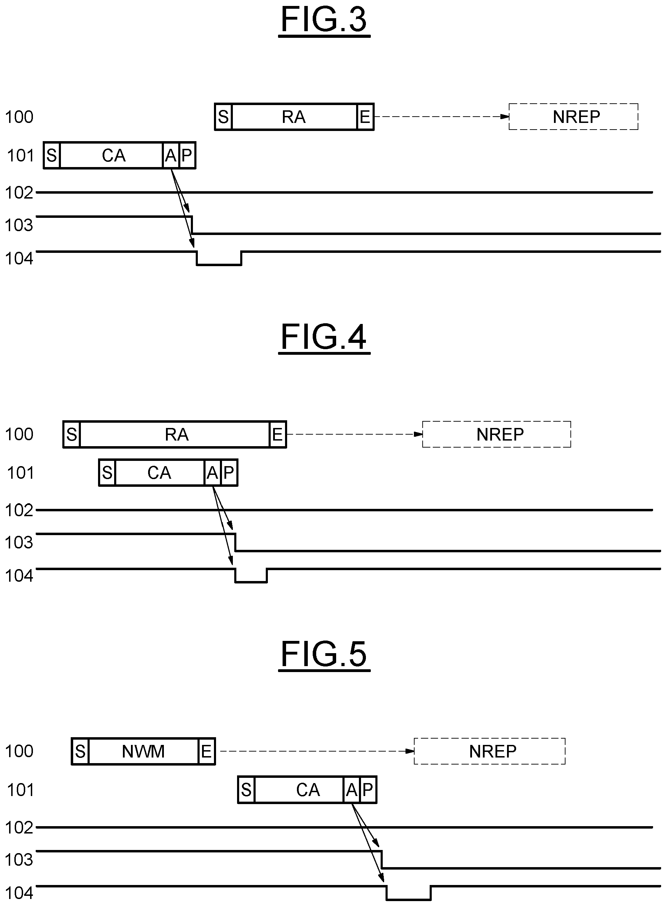

Les figures 3 à 7 illustrent des exemples de mise en oeuvre du procédé de gestion des accès mémoire décrit précédemment. Dans ces figures, le signal 100 représente les commandes radiofréquence reçues et émises par l'interface sans contact IR, le signal 101 représente les commandes d'arrêt reçues par l'interface filaire IF, le signal 102 représente un état d'accès en écriture à la mémoire MEM par l'interface sans contact IR (l'état haut du signal indiquant qu'un accès en écriture est en cours et l'état bas indiquant qu'aucun accès en écriture n'est en cours), le signal 103 représente l'état de l'interface sans contact (l'état haut du signal indiquant que l'interface sans contact est activée et l'état bas indiquant que l'interface sans contact est arrêtée), et le signal 104 représente le signal d'interruption (représenté à l'état bas).

Dans l'exemple illustré à la figure 3, la commande d'arrêt CA est reçue par le module d'arbitrage MA avant l'émission d'une requête d'accès RA à la mémoire par le lecteur sans contact LSC.

La requête d'accès RA est transmise dans une trame comprenant un premier bit S de début de trame, la requête d'accès RA puis un dernier bit E de fin de trame. La commande d'arrêt CA est transmise dans une trame comprenant un premier bit S de début de trame, la commande d'arrêt CA puis un bit d'acquittement A suivi d'un bit P de fin de trame.

Aucun accès en écriture n'est donc en cours à la fin de la réception de la commande d'arrêt CA, comme représenté par l'état bas du signal 102.

Comme aucun accès en écriture à la mémoire n'est en cours, le module d'arbitrage MA peut directement arrêter l'interface sans contact IR. Le signal 103 passe ainsi à l'état bas. Après avoir arrêté l'interface sans contact IR, le module d'arbitrage MA génère un signal d'interruption qu'il transmet à l'interface filaire IF (voir signal 104 passant à l'état bas).

L'interface sans contact IR étant arrêtée, la requête d'accès du lecteur sans contact LSC n'est pas traitée. Aucune réponse n'est donc envoyée suite à cette requête d'accès (l'absence de réponse étant représentée par l'information NREP). Le module maître MM obtient alors un accès exclusif à la mémoire MEM du transpondeur TRS.

Dans l'exemple illustré à la figure 4, la commande d'arrêt CA est reçue par le module d'arbitrage MA pendant qu'une requête d'accès RA émise par le lecteur sans contact LSC est également reçue par le module d'arbitrage MA.

Comme précédemment, la requête d'accès RA est transmise dans une trame comprenant un premier bit S de début de trame, la requête d'accès RA puis un dernier bit E de fin de trame. La commande d'arrêt CA est transmise dans une trame comprenant un premier bit S de début de trame, la commande d'arrêt CA puis un bit d'acquittement A suivi d'un bit P de fin de trame.

La réception de la commande d'arrêt se termine avant la fin de la réception de la requête d'accès. Aucun accès en écriture n'est donc en cours à la fin de la réception de la commande d'arrêt, comme représenté par l'état bas du signal 102.

Comme aucun accès en écriture à la mémoire n'est en cours, le module d'arbitrage MA peut directement arrêter l'interface sans contact IR. Le signal 103 passe ainsi à l'état bas.

Après avoir arrêté l'interface sans contact IR, le module d'arbitrage MA génère un signal d'interruption qu'il transmet à l'interface filaire IF (voir signal 104 passant à l'état bas).

L'interface sans contact IR étant arrêtée, la requête d'accès émise par le lecteur sans contact LSC n'est pas traitée. Aucune réponse n'est donc envoyée suite à cette requête d'accès (l'absence de réponse étant représentée par l'information NREP). Le module maître MM obtient alors un accès exclusif à la mémoire MEM du transpondeur TRS.

Dans l'exemple illustré à la figure 5, la commande d'arrêt CA est reçue par le module d'arbitrage MA après qu'une requête d'accès NWM mémoire provenant du lecteur sans contact LSC ait été reçue, mais avant qu'une réponse à cette commande d'accès ait été émise par le transpondeur TRS. Ici, cette requête d'accès NWM n'est pas une requête d'accès en écriture à la mémoire.

La requête d'accès NWM est transmise dans une trame comprenant un premier bit S de début de trame, la requête d'accès NWM puis un dernier bit E de fin de trame. La commande d'arrêt CA est transmise dans une trame comprenant un premier bit S de début de trame, la commande d'arrêt CA puis un bit d'acquittement A suivi d'un bit P de fin de trame.

Comme aucun accès en écriture à la mémoire n'est en cours, le module d'arbitrage MA peut directement arrêter l'interface sans contact IR. Le signal 103 passe ainsi à l'état bas.

Après avoir arrêté l'interface sans contact IR, le module d'arbitrage MA génère un signal d'interruption qu'il transmet à l'interface filaire IF (voir signal 104 passant à l'état bas).

L'interface sans contact IR étant arrêtée, le traitement de la requête d'accès émise par le lecteur sans contact LSC est arrêté. Aucune réponse n'est envoyée suite à cette requête d'accès (l'absence de réponse étant représentée par l'information NREP). Le module maître MM obtient alors un accès exclusif à la mémoire MEM du transpondeur TRS.

Dans l'exemple illustré à la figure 6, la commande d'arrêt CA est reçue par le module d'arbitrage MA après qu'une requête d'accès en écriture WM à la mémoire provenant du lecteur sans contact LSC ait été reçue, mais avant qu'une réponse à cette commande d'accès ait été émise par le transpondeur TRS.

La requête d'accès en écriture WM est transmise dans une trame comprenant un premier bit S de début de trame, la requête d'accès WM puis un dernier bit E de fin de trame. La commande d'arrêt CA est transmise dans une trame comprenant un premier bit S de début de trame, la commande d'arrêt CA puis un bit d'acquittement A suivi d'un bit P de fin de trame.

Du fait qu'un accès à la mémoire en écriture est en cours, le module d'arbitrage MA ne peut pas arrêter directement l'interface sans contact IR pour éviter une corruption de la mémoire pouvant résulter d'un arrêt de l'interface sans contact IR durant un accès en écriture à la mémoire par cette interface sans contact IR.

Le module d'arbitrage MA attend donc que l'accès en écriture se termine avant d'arrêter l'interface sans contact IR. Une fois l'accès en écriture terminé, le module d'arbitrage MA arrête l'interface sans contact IR. Le signal 103 passe ainsi à l'état bas.

Après avoir arrêté l'interface sans contact IR, le module d'arbitrage MA génère un signal d'interruption qu'il transmet à l'interface filaire IF (voir signal 104 passant à l'état bas).

L'interface sans contact IR étant arrêtée, aucune réponse n'est envoyée suite à cette requête d'accès (l'absence de réponse étant représentée par l'information NREP). Le module maître MM obtient alors un accès exclusif à la mémoire MEM du transpondeur TRS.

Dans l'exemple illustré à la figure 7, le lecteur sans contact LSC émet une requête d'accès mémoire. Cette requête d'accès mémoire est traitée et une réponse REP à cette requête d'accès est transmise au lecteur sans contact LSC.

La requête d'accès RA est transmise dans une trame comprenant un premier bit S de début de trame, la requête d'accès RA puis un dernier bit E de fin de trame. La réponse REP est comprise dans une trame débutant par un bit S de début de trame. La commande d'arrêt CA est transmise dans une trame comprenant un premier bit S de début de trame, la commande d'arrêt CA puis un bit d'acquittement A suivi d'un bit P de fin de trame.

La commande d'arrêt est reçue après le début de la transmission au lecteur sans contact LSC de ladite réponse mais avant la fin de cette transmission. Comme aucun accès en écriture à la mémoire n'a lieu à la fin de la réception de la commande d'arrêt, le module d'arbitrage MA peut directement arrêter l'interface sans contact IR. Le signal 103 passe ainsi à l'état bas.

Après avoir arrêté l'interface sans contact IR, le module d'arbitrage MA génère un signal d'interruption qu'il transmet à l'interface filaire IF (voir signal 104 passant à l'état bas).

L'interface sans contact IR étant arrêtée, le traitement de la requête d'accès émise par le lecteur sans contact LSC est arrêté et la transmission de la réponse REP n'est pas finalisée. Le module maître MM obtient alors un accès exclusif à la mémoire MEM du transpondeur TRS.

Le système SYS tel que décrit précédemment peut être utilisé dans le domaine des objets connectés. À ce titre, la figure 8 illustre schématiquement un objet connecté OBJ comprenant un système SYS tel que décrit précédemment. L'objet connecté OBJ peut être une montre connectée, ou bien un équipement connecté de domotique, ou encore un équipement public connecté, tel qu'un lampadaire connecté, sans que ces exemples ne soient limitatifs.

## Revendications

1. Transpondeur sans contact comprenant :
- une mémoire (MEM),
- une antenne (ANT) configurée pour recevoir des signaux (RAD),
- une interface sans contact (IR) couplée à l'antenne (ANT) et configurée pour émettre des requêtes d'accès à la mémoire (MEM) selon les signaux (RAD) reçus,
- une interface filaire (IF) configurée pour recevoir des requêtes d'accès à la mémoire (MEM),
- un module d'arbitrage (MA) configuré pour autoriser un accès à la mémoire (MEM) soit pour les requêtes d'accès émises par l'interface sans contact (IR) soit pour les requêtes d'accès reçues par l'interface filaire (IF),
**caractérisé en ce que** l'interface filaire (IF) est également configurée pour recevoir des commandes d'arrêt et transmettre ces commandes d'arrêt au module d'arbitrage (MA), le module d'arbitrage (MA) étant configuré pour pouvoir arrêter l'interface sans contact (IR) lorsqu'il reçoit une commande d'arrêt, de façon à autoriser un accès exclusif à la mémoire pour les requêtes d'accès reçues par l'interface filaire (IF).

2. Transpondeur selon la revendication 1, dans lequel le module d'arbitrage (MA) est configuré pour générer un signal d'interruption et pour transmettre ce signal d'interruption à une sortie (O1) du transpondeur (TRS) après avoir arrêté l'interface sans contact (IR).

3. Transpondeur selon l'une quelconque des revendications 1 ou 2, dans lequel l'interface filaire (IF) est également configurée pour recevoir des commandes de réactivation et transmettre ces commandes de réactivation au module d'arbitrage (MA), le module d'arbitrage (MA) étant configuré pour réactiver l'interface sans contact (IR) lorsqu'il reçoit une commande de réactivation.

4. Transpondeur selon l'une des revendications 1 à 3, dans lequel le module d'arbitrage (MA) est configuré pour recevoir une information sur un état d'un accès en écriture à la mémoire (MEM) par l'interface sans contact (IR), et pour, lorsqu'une commande d'arrêt est reçue alors qu'un accès en écriture à la mémoire (MEM) par l'interface sans contact (IR) est en cours, attendre que cet accès en écriture soit terminé pour arrêter l'interface sans contact (IR).

5. Transpondeur selon l'une des revendications 1 à 4, dans lequel l'interface filaire (IF) est configurée pour recevoir des commandes comportant une adresse et des données utiles, la commande d'arrêt étant une commande comportant uniquement une adresse dédiée à cette commande d'arrêt et un bit de lecture/écriture.

6. Transpondeur selon la revendication 5, dans lequel la commande d'arrêt est représentée par un seul octet.

7. Transpondeur selon l'une des revendications 3 à 6, dans lequel l'interface filaire (IF) est configurée pour recevoir des commandes comportant une adresse et des données utiles, la commande de réactivation étant une commande comportant uniquement une adresse dédiée à cette commande de réactivation et un bit de lecture/écriture.

8. Transpondeur selon la revendication 7, dans lequel la commande de réactivation est représentée par un seul octet.

9. Transpondeur selon l'une des revendications 1 à 8, dans lequel l'interface filaire (IF) est adaptée pour être couplée à un bus I²C (BI).

10. Transpondeur selon l'une des revendications 1 à 9, capable d'échanger des informations via l'antenne (ANT) avec un lecteur sans contact externe (LSC), selon un protocole de communication sans contact compatible avec la technologie NFC ou RFID.

11. Système comprenant :
- un transpondeur (TRS) selon l'une des revendications 1 à 10, et
- un module maître (MM) couplé à l'interface filaire (IF) du transpondeur (TRS), le module maître (MM) étant configuré pour émettre des commandes d'arrêt à destination du transpondeur (TRS) puis pour envoyer des requêtes d'accès mémoire après un arrêt de l'interface sans contact (IR) effectué par le module d'arbitrage (MA) du transpondeur (TRS) suite à la réception par l'interface filaire (IF) d'une commande d'arrêt.

12. Système selon la revendication 11, dans lequel le module maître (MM) est un microcontrôleur.

13. Objet connecté comprenant un système selon la revendication 12.

14. Procédé de gestion des accès à une mémoire d'un transpondeur selon l'une des revendications 1 à 10, le procédé étant **caractérisé en ce qu'**il comprend :
- une réception par l'interface filaire (IF) d'une commande d'arrêt, puis
- une transmission de la commande d'arrêt au module d'arbitrage (MA), puis
- un arrêt de l'interface sans contact (IR) par le module d'arbitrage (MA), de façon à autoriser un accès exclusif à la mémoire pour des requêtes d'accès reçues par l'interface filaire (IF).

15. Procédé selon la revendication 14, comprenant, suite à l'arrêt de l'interface sans contact (IR) par le module d'arbitrage (MA), une génération d'un signal d'interruption par le module d'arbitrage (MA), puis une transmission de ce signal d'interruption à une sortie (O1) du transpondeur (TRS).

16. Procédé selon l'une quelconque des revendications 14 ou 15, dans lequel, lorsqu'une commande d'arrêt est reçue alors qu'un accès en écriture à la mémoire (MEM) par l'interface sans contact (IR) est en cours, l'arrêt de l'interface sans contact (IR) est réalisé après que cet accès en écriture soit terminé.

17. Procédé selon l'une des revendications 14 à 16, comprenant, suite à l'arrêt de l'interface sans contact (IR) :
- une réception d'une commande de réactivation par l'interface filaire (IF), puis
- une transmission de cette commande de réactivation au module d'arbitrage (MA), puis
- une réactivation de l'interface sans contact (IR) par le module d'arbitrage (MA).

## Patentansprüche

1. Kontaktloser Transponder, umfassend:
- eine Speichereinheit (MEM),
- eine Antenne (ANT), konfiguriert, um Signale (RAD) zu empfangen,
- eine kontaktlose Schnittstelle (IR), gekoppelt mit der Antenne (ANT) und konfiguriert, um Zugriffsanforderungen an die Speichereinheit (MEM) gemäß den empfangenen Signalen (RAD) zu emittieren,
- eine drahtgebundene Schnittstelle (IF), konfiguriert, um Zugriffsanforderungen an die Speichereinheit (MEM) zu empfangen,
- ein Arbitrage-Modul (MA), konfiguriert, um einen Speichereinheitszugriff (MEM) entweder für die Zugriffsanforderungen zu ermöglichen, die von der kontaktlosen Schnittstelle (IR) emittiert werden, oder für die Zugriffsanforderungen, die von der drahtgebundenen Schnittstelle (IF) empfangen werden,
**dadurch gekennzeichnet, dass** die drahtgebundene Schnittstelle (IF) auch konfiguriert ist, um Stoppbefehle zu empfangen und diese Stoppbefehle an das Arbitrage-Modul (MA) zu übertragen, wobei das Arbitrage-Modul (MA) konfiguriert ist, um die kontaktlose Schnittstelle (IR) stoppen zu können, wenn sie einen Stoppbefehl empfängt, um einen exklusiven Zugriff auf die Speichereinheit zu ermöglichen für die Zugriffsanforderungen, die von der drahtgebundenen Schnittstelle (IF) empfangen werden.

2. Transponder nach Anspruch 1, wobei das Arbitrage-Modul (MA) konfiguriert ist, um ein Unterbrechungssignal zu erzeugen und dieses Unterbrechungssignal an einen Ausgang (O1) des Transponders (TRS) zu übertragen, nachdem es die kontaktlose Schnittstelle (IR) gestoppt hat.

3. Transponder nach einem der Ansprüche 1 oder 2, wobei die drahtgebundene Schnittstelle (IF) auch konfiguriert ist, um Reaktivierungsbefehle zu empfangen und diese Reaktivierungsbefehle an das Arbitrage-Modul (MA) zu übertragen, wobei das Arbitrage-Modul (MA) konfiguriert ist, um die kontaktlose Schnittstelle (IR) zu reaktivieren, wenn sie einen Reaktivierungsbefehl empfängt.

4. Transponder nach einem der Ansprüche 1 bis 3, wobei das Arbitrage-Modul (MA) konfiguriert ist, um eine Information über einen Zustand eines Schreibzugriffs auf die Speichereinheit (MEM) durch die kontaktlose Schnittstelle (IR) zu empfangen, und, wenn ein Stoppbefehl empfangen wird, während ein Schreibzugriff auf die Speichereinheit (MEM) durch die kontaktlose Schnittstelle (IR) ausgeführt wird, zu warten, bis dieser Schreibzugriff abgeschlossen ist, um die kontaktlose Schnittstelle (IR) zu stoppen.

5. Transponder nach einem der Ansprüche 1 bis 4, wobei die drahtgebundene Schnittstelle (IF) konfiguriert ist, um Befehle zu empfangen, die eine Adresse und Nutzdaten enthalten, wobei der Stoppbefehl ein Befehl ist, der nur eine Adresse enthält, die diesem Stoppbefehl gewidmet ist, und ein Lese-/Schreib-Bit.

6. Transponder nach Anspruch 5, wobei der Stoppbefehl durch ein einzelnes Oktett wiedergegeben wird.

7. Transponder nach einem der Ansprüche 3 bis 6, wobei die drahtgebundene Schnittstelle (IF) konfiguriert ist, um Befehle zu empfangen, die eine Adresse und Nutzdaten enthalten, wobei der Reaktivierungsbefehl ein Befehl ist, der nur eine Adresse enthält, die diesem Reaktivierungsbefehl gewidmet ist, und ein Lese-/Schreib-Bit.

8. Transponder nach Anspruch 7, wobei der Reaktivierungsbefehl durch ein einzelnes Oktett wiedergegeben wird.

9. Transponder nach einem der Ansprüche 1 bis 8, wobei die drahtgebundene Schnittstelle (IF) angepasst ist, um an einen I²C-Bus (BI) gekoppelt zu werden.

10. Transponder nach einem der Ansprüche 1 bis 9, der in der Lage ist, Informationen über die Antenne (ANT) mit einem externen kontaktlosen Lesegerät (LSC) gemäß einem kontaktlosen Kommunikationsprotokoll auszutauschen, das mit der Technologie NFC oder RFID kompatibel ist.

11. System, umfassend:
- einen Transponder (TRS) nach einem der Ansprüche 1 bis 10, und
- ein Mastermodul (MM), das mit der drahtgebundenen Schnittstelle (IF) des Transponders (TRS) gekoppelt ist, wobei das Mastermodul (MM) konfiguriert ist, um Stoppbefehle an den Transponder (TRS) zu emittieren, und anschließend Speichereinheitszugriffsanforderungen zu senden, nach einem Stoppen der kontaktlosen Schnittstelle (IR), das vom Arbitrage-Modul (MA) des Transponders (TRS) durchgeführt wurde nach dem Empfang eines Stoppbefehls durch die drahtgebundene Schnittstelle (IF).

12. System nach Anspruch 11, wobei das Mastermodul (MM) ein Mikrocontroller ist.

13. Vernetztes Objekt, ein System nach Anspruch 12 umfassend.

14. Verfahren zum Verwalten des Zugriffs auf eine Speichereinheit eines Transponders nach einem der Ansprüche 1 bis 10, wobei das Verfahren **dadurch gekennzeichnet ist, dass** es umfasst:
- einen Empfang eines Stoppbefehls durch die drahtgebundene Schnittstelle (IF), anschließend
- eine Übertragung des Stoppbefehls an das Arbitrage-Modul (MA), anschließend
- ein Stoppen der kontaktlosen Schnittstelle (IR) durch das Arbitrage-Modul (MA), um einen exklusiven Zugriff auf die Speichereinheit zu ermöglichen für Zugriffsanforderungen, die über die drahtgebundene Schnittstelle (IF) empfangen werden.

15. Verfahren nach Anspruch 14, nach dem Stoppen der kontaktlosen Schnittstelle (IR) durch das Arbitrage-Modul (MA), eine Erzeugung eines Unterbrechungssignals durch das Arbitrage-Modul (MA) umfassend, anschließend eine Übertragung dieses Unterbrechungssignals an einen Ausgang (O1) des Transponders (TRS).

16. Verfahren nach einem der Ansprüche 14 oder 15, wobei, wenn ein Stoppbefehl empfangen wird, während ein Schreibzugriff auf die Speichereinheit (MEM) durch die kontaktlose Schnittstelle (IR) ausgeführt wird, das Stoppen der kontaktlosen Schnittstelle (IR) realisiert wird, nachdem dieser Schreibzugriff abgeschlossen ist.

17. Verfahren nach einem der Ansprüche 14 bis 16, nach dem Stoppen der kontaktlosen Schnittstelle (IR) umfassend:
- einen Empfang eines Reaktivierungsbefehls durch die drahtgebundene Schnittstelle (IF), anschließend
- eine Übertragung dieses Reaktivierungsbefehls an das Arbitrage-Modul (MA), anschließend
- eine Reaktivierung der kontaktlosen Schnittstelle (IR) durch das Arbitrage-Modul (MA).

## Claims

1. A contactless transponder comprising:
- a memory (MEM),
- an antenna (ANT) configured to receive signals (RAD),
- a contactless interface (IR) coupled to the antenna (ANT) and configured to emit memory access requests (MEM) according to the signals (RAD) received,
- a wired interface (IF) configured to receive memory access requests (MEM),
- an arbitration module (MA) configured to authorise access to the memory (MEM) either for access requests emitted by the contactless interface (IR) or for access requests received by the wired interface (IF), **characterised in that** the wired interface (IF) is also configured to receive shutdown controls and transmit these shutdown controls to the arbitration module (MA), the arbitration module (MA) being configured to be able to shut down the contactless interface (IR) when it receives a shutdown control, so as to authorise exclusive access to the memory for access requests received by the wired interface (IF).

2. The transponder according to claim 1, wherein the arbitration module (MA) is configured to generate an interrupt signal and to transmit this interrupt signal to an output (O1) of the transponder (TRS) after shutting down the contactless interface (IR).

3. The transponder according to any one of claims 1 or 2, wherein the wired interface (IF) is also configured to receive reactivation controls and transmit these reactivation controls to the arbitration module (MA), the arbitration module (MA) being configured to reactivate the contactless interface (IR) when it receives a reactivation control.

4. The transponder according to one of claims 1 to 3, wherein the arbitration module (MA) is configured to receive a piece of information on a state of a write access to the memory (MEM) by the contactless interface (IR), and, when a shutdown control is received while a write access to the memory (MEM) by the contactless interface (IR) is in progress, to wait for this write access to be completed to shut down the contactless interface (IR).

5. The transponder according to one of claims 1 to 4, wherein the wired interface (IF) is configured to receive controls including an address and useful data, the shutdown control being a control including only an address dedicated to this shutdown control and a read/write bit.

6. The transponder according to claim 5, wherein the shutdown control is represented by a single byte.

7. The transponder according to one of claims 3 to 6, wherein the wired interface (IF) is configured to receive controls including an address and useful data, the reactivation control being a control including only an address dedicated to this reactivation control and a read/write bit.

8. The transponder according to claim 7, wherein the reactivation control is represented by a single byte.

9. The transponder according to one of claims 1 to 8, wherein the wired interface (IF) is adapted to be coupled to an I²C bus (BI).

10. The transponder according to one of claims 1 to 9, capable of exchanging information items via the antenna (ANT) with an external contactless reader (LSC), according to a contactless communication protocol compatible with the NFC or RFID technology.

11. A system comprising:
- a transponder (TRS) according to one of claims 1 to 10, and
- a master module (MM) coupled to the wired interface (IF) of the transponder (TRS), the master module (MM) being configured to emit shutdown controls to the transponder (TRS) then to send memory access requests after a shutdown of the contactless interface (IR) carried out by the arbitration module (MA) of the transponder (TRS) after receiving a shutdown control by the wired interface (IF).

12. The system according to claim 11, wherein the master module (MM) is a microcontroller.

13. A connected object comprising a system according to claim 12.

14. The method for managing access to a memory of a transponder according to one of claims 1 to 10, the method being **characterised in that** it comprises:
- receiving a shutdown control by the wired interface (IF), then
- transmitting the shutdown control to the arbitration module (MA), then
- shutting down the contactless interface (IR) by the arbitration module (MA), so as to authorise exclusive access to the memory for access requests received by the wired interface (IF).

15. The method according to claim 14, comprising, after shutting down the contactless interface (IR) by the arbitration module (MA), generating an interrupt signal by the arbitration module (MA), then transmitting this interrupt signal to an output (O1) of the transponder (TRS).

16. The method according to any one of claims 14 or 15, wherein, when a shutdown control is received while a write access to the memory (MEM) by the contactless interface (IR) is in progress, the shutdown of the contactless interface (IR) is carried out after this write access is completed.

17. The method according to one of claims 14 to 16, comprising, after shutting down the contactless interface (IR):
- receiving a reactivation control via the wired interface (IF), then
- transmitting this reactivation control to the arbitration module (MA), then
- reactivating the contactless interface (IR) by the arbitration module (MA).
